# EUROPEAN PATENT APPLICATION

(11) **EP 0 559 177 A2**
(43) Date of publication of application: **08.09.1993**
(21) Application number: 93103401.1
(22) Date of filing: 03.03.1993
(51) Int. Cl.: G11B 11/10

(54) **Magnetic head for magneto-optical recording**

(30) Priority: 04.03.1992 JP 47244/92
(71) Applicant: SONY CORPORATION, Tokyo (JP)
(72) Inventor: Nagaki, Takehiro, c/o Sony Corporation, Tokyo (JP); Hasegawa, Hayato, c/o Sony Corporation, Tokyo (JP)
(74) Representative: TER MEER - MÜLLER - STEINMEISTER & PARTNER

(57) **Abstract**

The slide-type magnetic head for magneto-optical recording comprises a head body (11) having a head base (12) on which a head element (15) is mounted, a head arm (14), a hinge construction member (13) formed of upper and lower parallel coupling members (31,32) and hinge portions (33,34) formed on respective ends of the upper and lower coupling members (31,32), wherein the head base (12) is supported to the head arm (14) by means of the hinge construction member (13) so that the head base (12) can be parallelly moved in the upper and lower direction and the head body (11) is brought in slidable contact with a recording medium. According to a modified embodiment, spring members are provided parallel to the coupling members (31,32) which can be made of a conductive material to serve as leads for the coil (19) of said head element (15). The slide-type magnetic head for magneto-optical recording can be made light-weight and can be brought in contact with the recording medium surface with a small pressure. Further, this magnetic head can sufficiently follow the recording medium even when the recording medium is displaced in the upper and lower direction due to a rotational fluctuation of the recording medium and has a long lifetime.

## Description

### BACKGROUND OF THE INVENTION

### Field of the Invention:

The present invention generally relates to magnetic heads for use in magneto-optical recording and, more particularly, is directed to a sliding type magnetic head for magneto-optical recording which carries out the magneto-optical recording while in slidable contact with a magneto-optical recording medium.

### Description of the Prior Art:

One of writable optical discs in which an information can be written, erased and read out by using a light beam, there is known a magneto-optical disc.

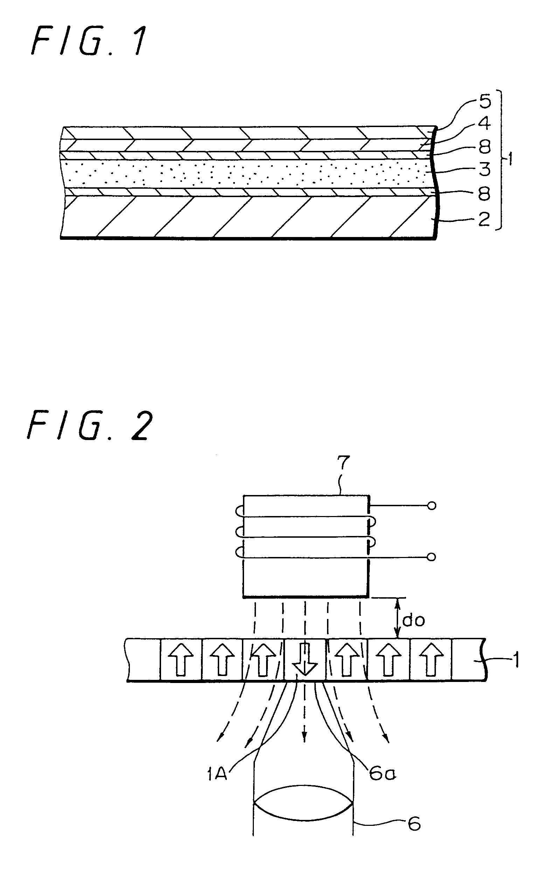

FIG. 1 of the accompanying drawings shows an example of a magneto-optical recording disc 1 that is constructed as follows.
As shown in FIG. 1, a magneto-optical recording layer 3 formed of a vertical magnetization layer is formed on a transparent substrate 1 through an SiN- protecting layer 8. A reflecting layer 4 formed of a metal thin film such as an Aℓ layer is laminated on the magneto-optical recording layer 3 through the SiN protecting layer 8. A protecting layer 5 made of an ultraviolet setting resin or the like is formed on the reflecting film 4.

As a magneto-optical disc recording system, there are known a magnetic field modulation system, a light modulation system or the like.

The magnetic field modulation system can provide a so-called overwrite in which a new signal is overwritten on an old signal. The magneto-optical recording of magnetic field modulation system will be described with reference to FIG. 2. As shown in FIG. 2, an optical pickup for radiating a laser beam 6 is disposed on one side (substrate 2 side in FIG. 1) of the magneto-optical disc 1 having a magneto-optical recording layer formed of the vertical magnetization layer and a magnetic field generating means moving in synchronism with a laser spot, i.e., a magnetic head 7 is disposed on the other side (protecting film 5 side in FIG. 1) of the magneto-optical disc 1. Thus, a magnetic field direction is changed by changing a direction of a current flowing through the magnetic head 7. The magneto-optical disc 1 is rotated about its central portion at a predetermined rotational speed.

A magnetic field corresponding to a recording signal is formed near a laser spot 6a. After an overwrite desired portion 1A of the magneto-optical disc 1 is heated at temperature higher than a Curie temperature and demagnetized, when the overwrite desired portion 1A is moved from the laser spot 6a and lowered at temperature less than the Curie temperature, it is magnetized in the magnetization direction to effect the recording.

The conventional magneto-optical disc is a non-contact medium and therefore the magnetic head 7 is distant from the magneto-optical disc 1 by a sufficient spacing d₀.

The assignee of the present application has previously developed a very small digital recording and reproducing apparatus in which the digital recording and reproducing can be made by a very small magneto-optical disc. This very small digital recording and reproducing machine adopts a magnetic field modulation type magneto-optical recording method and makes the overwrite possible.

Since a recording is made on the conventional magneto-optical disc in a non-contact fashion as described above, the magnetic head 7 for magneto-optical recording includes an electromagnetic servo mechanism in order to follow up a rotational fluctuation on the disc surface of the magneto-optical disc 1 when the magneto-optical disc 1 is rotated while the magnetic head 7 is distant from the magneto-optical disc 1. The above rotational fluctuation on the disc surface is caused because the disc 1 has a skew and the thickness of the disc 1 is not uniform. For this reason, in the recording and reproducing apparatus of the non-contact type for the magneto-optical disc, there are then the limits when the electric power consumption is reduced and the apparatus is miniaturized (in particular, the thickness of the apparatus is reduced).

If the magnetic head is formed as a contact type that the magnetic head is in slidable contact with the magneto-optical disc, then the magnetic head can be supported only by a simple supporting member and the conventional electromagnetic servo mechanism of poor space factor can be omitted, which becomes advantageous when an electric power consumption of the recording and reproducing apparatus is reduced and the apparatus is miniaturized.

### OBJECTS AND SUMMARY OF THE INVENTION

Therefore, it is an object of the present invention to provide an improved magnetic head for magneto-optical recording in which the aforesaid shortcomings and disadvantages encountered with the prior art can be eliminated.

More specifically, it is an object of the present invention to provide a magnetic head for magneto-optical recording which can be reduced in weight.

It is another object of the present invention to provide a magnetic head for magneto-optical recording which can be simplified in structure.

It is still another object of the present invention to provide a magnetic head for magneto-optical recording which can follow sufficiently a recording medium when the recording medium is displaced in the upper and lower direction due to a rotational fluctuation of the recording medium surface.

It is a further object of the present invention to provide a magnetic head for magneto-optical recording which is long in life.

It is yet a further object of the present invention to provide a magnetic head for magneto-optical recording which can be applied to a magnetic field modulation system and a light modulation system.

According to a first aspect of the present invention, there is provided a slide-type magnetic head for magneto-optical recording which comprises a head body having a head base on which a head element is mounted, the head body being brought in slidable contact with a recording medium, head arm, and a hinge construction member formed of upper and lower parallel coupling members and hinge portions formed on respective ends of the upper and lower coupling members, wherein the head base is supported to the head arm by means of the hinge construction member so that the head base can be parallelly moved in the upper and lower direction.

According to a second aspect of the present invention, there is provided a slide-type magnetic head for magneto-optical recording which comprises a head body having a head base on which a head element is mounted, the head body being brought in slidable contact with a recording medium, a head arm, and a hinge construction member formed of coupling members having hinge portions formed at respective ends and spring members parallel to the coupling members, wherein the head base is supported to the head arm by means of the hinge construction member so that the head base can be parallelly moved in the upper and lower direction.

According to the present invention, the slide-type magnetic head for magneto-optical recording can be made lightweight and can be brought in contact with the recording medium surface with a small pressure. Further, this magnetic head can sufficiently follow the recording medium even when the recording medium is displaced in the upper and lower direction due to a rotational fluctuation of the recording medium. Therefore, the magnetic head of the present invention can be made high in reliability and long in life.

The above and other objects, features, and advantages of the present invention will become apparent from the following detailed description of illustrative embodiments thereof to be read in conjunction with the accompanying drawings, in which like reference numerals are used to identify the same or similar parts in the several views.

### BRIEF DESCRIPTION OF THE DRAWINGS

FIG. 1 is a cross-sectional view showing a conventional magneto-optical disc;
FIG. 2 is a diagram used to explain a magnetic field modulation system according to the prior art;
FIG. 3 is a perspective view showing a slide-type magnetic head for magneto-optical recording according to a first embodiment of the present invention;
FIG. 4 is an exploded perspective view showing a head element according to the present invention;
FIG. 5 is a perspective view showing the head element according to the present invention under the condition that the assembly process of the head element was ended;
FIG. 6 is a perspective view showing elements and parts of the slide-type magnetic head for magneto-optical recording according to the first embodiment of the present invention;
FIG. 7A is a plan view showing the slide-type magnetic head for magneto-optical recording according to the first embodiment of the present invention;
FIG. 7B is a front view thereof;
FIG. 8A is a front view showing the slide-type magnetic head for magneto-optical recording according to the present invention under the condition that the magnetic head is brought in contact with the disc;
FIG. 8B is a side view showing the condition that the head body is brought in contact with the disc;
FIGS. 9A through 9C are respectively diagram used to explain operation of the slide-type magnetic head for magneto-optical recording according to the present invention;
FIG. 10 is a diagram showing a structure of a main portion of the slide-type magnetic head for magneto-optical recording according to a second embodiment of the present invention;
FIG. 11 is a diagram showing a structure of a main portion of the slide-type magnetic head for magneto-optical recording according to a third embodiment of the present invention;
FIGS. 12A and 12B are respectively a plan view and a front view showing the magnetic head shown in the third embodiment of the present invention under the condition that the head body is removed;
FIG. 13 is a diagram used to explain operation state of the magnetic head of the third embodiment of the present invention;
FIG. 14 is a perspective view showing a structure of a main portion of the slide-type magnetic head for magneto-optical recording according to a fourth embodiment of the present invention;
FIG. 15 is a perspective view showing a structure of a main portion of the slide-type magnetic head for magneto-optical recording according to a sixth embodiment of the present invention;
FIG. 16 is a plan view showing schematically a magneto-optical recording and reproducing apparatus that can be applied to the present invention; and
FIG. 17 is a side view showing schematically the magneto-optical recording and reproducing apparatus that can be applied to the present invention.

### DETAILED DESCRIPTION OF THE PREFERRED EMBODIMENTS

A slide-type magnetic head for magneto-optical recording according to the present invention will hereinafter be described with reference to the drawings.

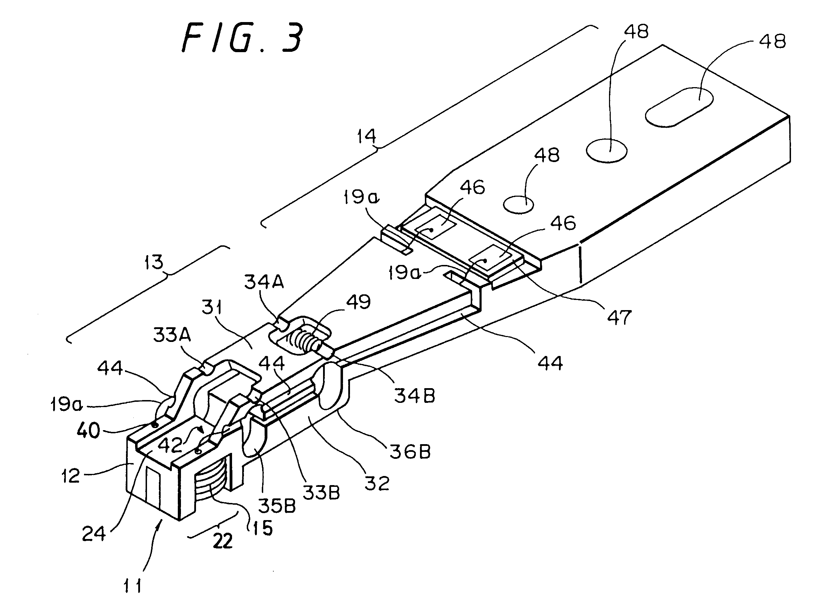

FIG. 3 of the accompanying drawings shows a magnetic head according to a first embodiment of the present invention.

In this embodiment, as shown in FIG. 3, the magnetic head comprises a magnetic head body 11 in which a magnetic head element 15 is mounted on a head base 12, a head arm 14 for supporting the magnetic head body 11, and a hinge construction member 13 interposed between the magnetic head body 11 and the top of the head arm 14 for moving the magnetic head body 11 in parallel in the upper and lower direction in response to a rotational fluctuation on the disc surface of the magneto-optical disc (not shown).

A magnetic head element 15 comprises a ferrite magnetic core 18 of substantially E-letter configuration formed of a central magnetic core 18A and a side magnetic core 18B, a coil 19 wound around the central magnetic core 18A and a sliding portion 20 made of a resin material, for example, attached to one side of the magnetic head element 15. The sliding portion 20 slidably contacts with the disc surface and includes a sliding surface 20a that is projected from the magnetic head element 15, i.e., the top of the central magnetic core 18A by a distance d₁.

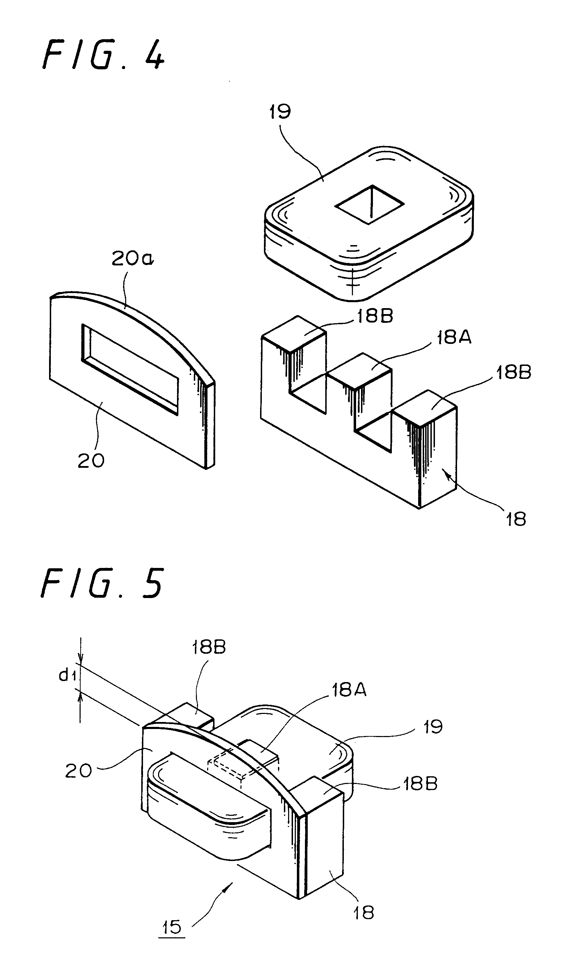

While the sliding portion is attached only to one side of the magnetic head element 15 as shown in FIGS. 4 and 5, the present invention is not limited thereto. If necessary, the sliding portion 20 of the same structure can be attached to the respective sides of the magnetic head element 15.

The head base 12, the hinge construction member 13 and the head arm 14 are each molded by polyacetal-system, polyethylene-system and other so-called engineering plastics material according to the integral molding process.

The head base 12 includes leg portions 21 formed at four corners of a lower surface portion 22 and a concave portion 23 surrounded by the leg portions 21 to accept the magnetic head element 15 from the lower surface side. On the top of each leg portion 21, there is formed a tab portion 21a that engages the magnetic head element 15 after the magnetic head element 15 was inserted into the head base 12.

A groove 24 of a predetermined width extending along the longitudinal direction of the head arm 14 is formed on an upper surface portion 42 of the head base 12. The upper surface portion 42 has a through-hole 40 from which a coil terminal of the magnetic head element 15 is led out. The magnetic head element 15 is inserted into the head base 12 and thus the head body 11 is constructed. Instead of the sliding portion 20, a thin sliding portion having a curved sliding surface may be bonded to the lower surface portion 22 of the head base 12.

The hinge construction member 13 comprises two opposing coupling members 31, 32 parallelly disposed in the upper and lower direction with a predetermined spacing t₁, and thin hinge portions 33, 34, 35 and 36 formed at front and rear ends of the two coupling members 31, 32.

More specifically, in the upper coupling member 31, relatively thin flat-shaped parallel both side portions 31A, 31B are formed thick and hinge portions 33 (33A, 33B) and 34 (34A, 34B) are respectively formed on front and rear ends of the two side portions 31A, 31B. The lower coupling member 32 is formed as a thick flat-plate and hinge portions 35 (35A, 35B) and 36 (36A, 36B) are respectively formed on front and rear ends of the two side portions 32A, 32B. Therefore, according to this embodiment, eight hinge portions 33 to 36 are formed in association with respective corners of a parallelogram. The head base 12 and the coupling members 31, 32 are coupled by the binge portions 33A, 33B, 35A, 35B and the coupling members 31, 32 and the head arm 14 are coupled by the hinge portions 34A, 34B, 36A, 36B.

When the hinge construction member 13 is seen from side surface, the upper and lower coupling members 31 and 32 are distant by a predetermined spacing t₁, and both edges of the spacing t₁ have an opening portion 41 formed therebetween in the upper and lower direction. The hinge portions 33 to 36 are reduced in thickness by the opening portion 41. The upper and lower coupling members 31, 32 of the hinge construction member 13 have an opening portion 43 sandwiched on the head arm 14 side and the head base 12 side by the respective hinge portions.

Guide grooves 44 are respectively formed on side surfaces of the head base 12, the upper coupling member 31 and the head arm 14 so that coil terminals (i.e., lead wires) 19a of the magnetic head element 15 are guided to pass the guide grooves 44. The guide groove 44 on the head arm 14 side is formed so as to communicate with the upper surface of the head arm 14. The head arm 14 is tapered so that the hinge construction member 13 is reduced in width in the top thereof (in the left-hand side of FIG. 3). A terminal plate 47 having a pair of conductive layers 46 is formed on the intermediate upper surface of the head arm 14. In FIG. 3, reference numeral 48 depicts an attachment aperture.

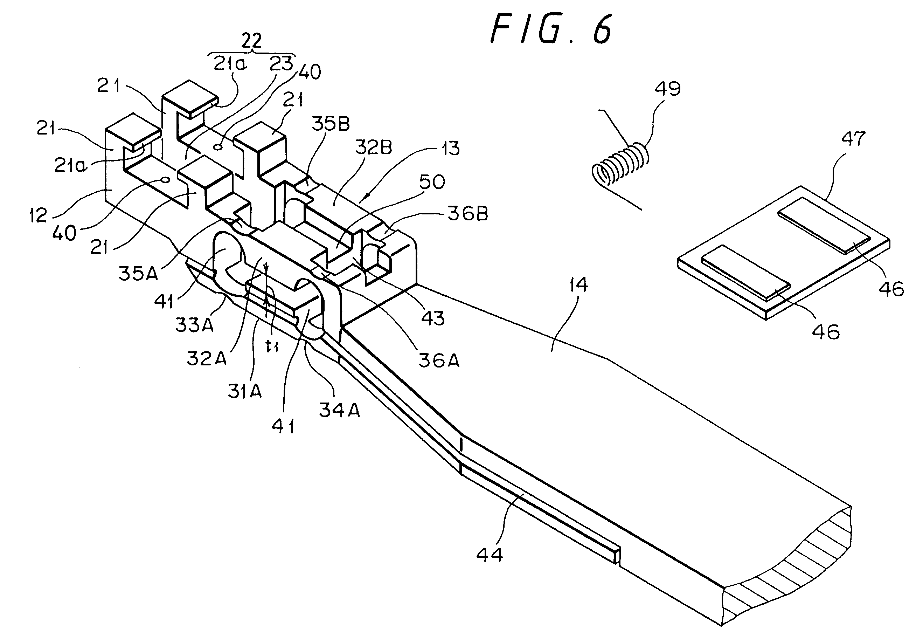

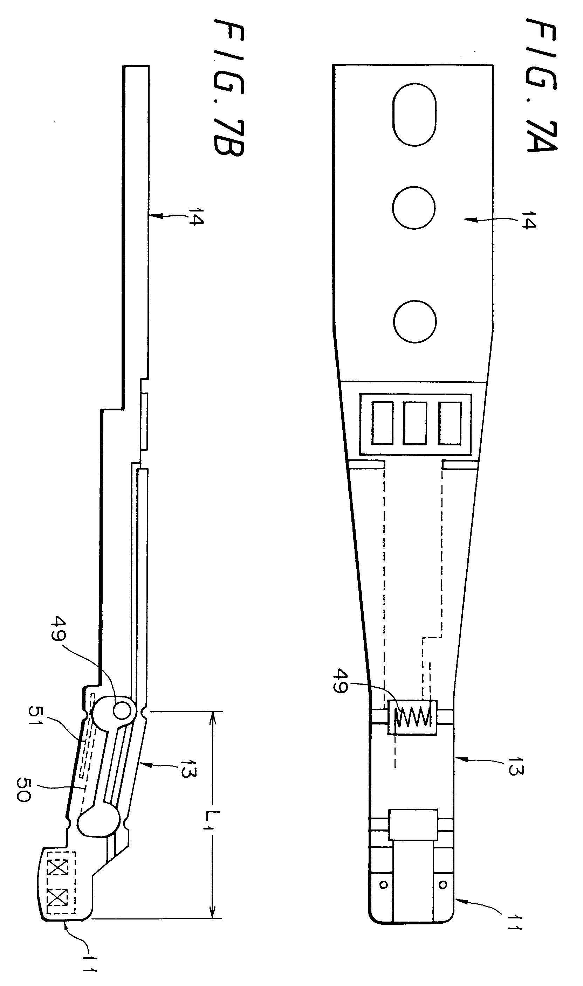

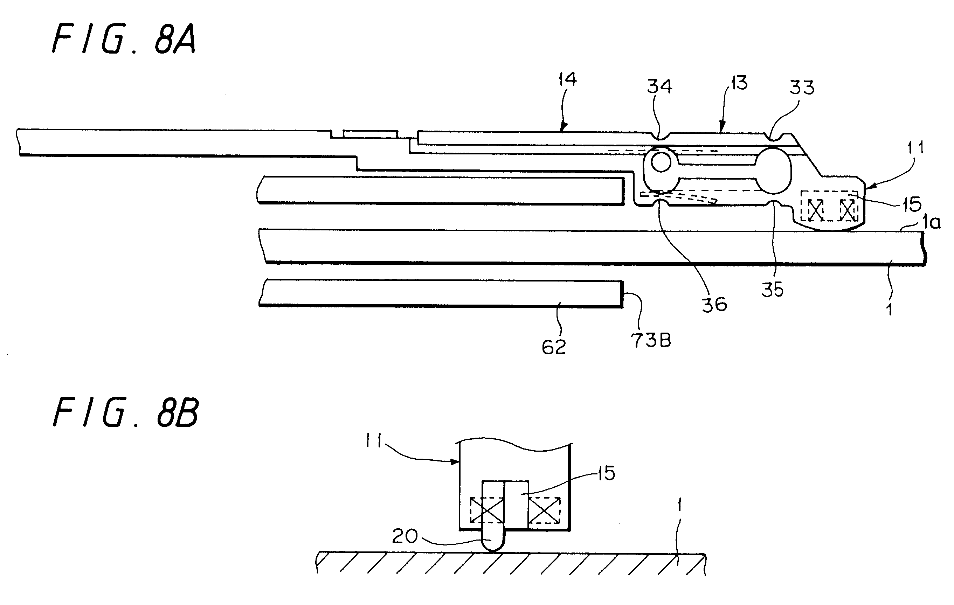

A horizontal-type coil spring 49 shown in FIG. 6 and FIGS. 7A, 7B is interposed between the hinge construction member 13 and the head arm 14 within the opening portion 43 of the head arm 14 side, whereby the hinge construction member 13 is spring-biased downwardly. Thus, the head body 11 coupled to the hinge construction member 13 is displaced in the lower position. At that time, one end of the coil spring 49 is engaged with an engagement groove (not shown) on the inside of the upper coupling member 31 and the other end thereof is engaged with an engagement groove (not shown) on the inner surface of the head arm 14.

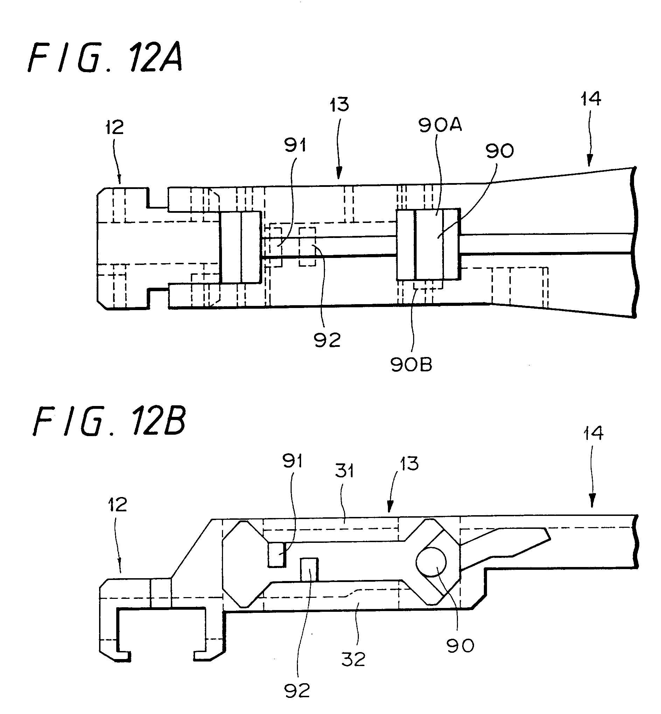

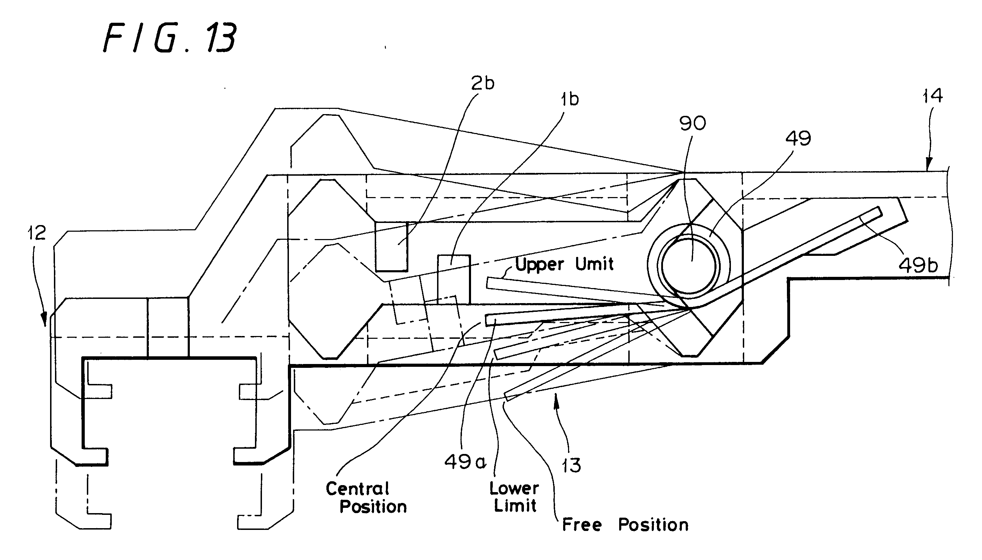

A method of attaching the coil spring 49 to the hinge construction member 13 will be described with reference to FIGS. 12A, 12B and FIG. 13. As illustrated, the hinge construction member 13 has a stem 90 whose diameter is a little smaller than th8e inner diameter of the coil spring 49 and the coil spring 49 is fitted into the stem 90. One end 90A of the stem 90 is fixed and the other portion 90B is a free end. One end 49a of the coil spring 49 is engaged with the lower coupling member 32 and the other end 49b thereof is engaged with the head arm 14 side. Under the condition that the coil spring 49 is not yet mounted, one end 49a thereof is placed at a free position shown in FIG. 13.

A groove 50 is formed on the lower surface of the lower coupling member 32 and a stopper portion 51 extending from the head arm 14 to the groove 50 is formed. When the head body 11 is lowered in excess of an allowable range, the stopper portion 50 contacts with the bottom surface of the groove 50 to thereby prevent the head body 11 from being lowered more than this. The stopper portion 51 is made of a metal (aluminum, Aℓ), a resin or the like and can be integrally formed by an insert molding process if the stopper portion is made of a metal.

The coil terminal 19a are introduced through through-holes 40 of the head base 12 onto the upper surface of the head base 12. Then, the coil terminals 19a are respectively guided into the guide grooves 44 and introduced on the upper surface of the head arm 14. The coil terminals 19a are electrically connected to the conductive layers 46 on the terminal plate 47 formed on the upper surface of the head arm 14.

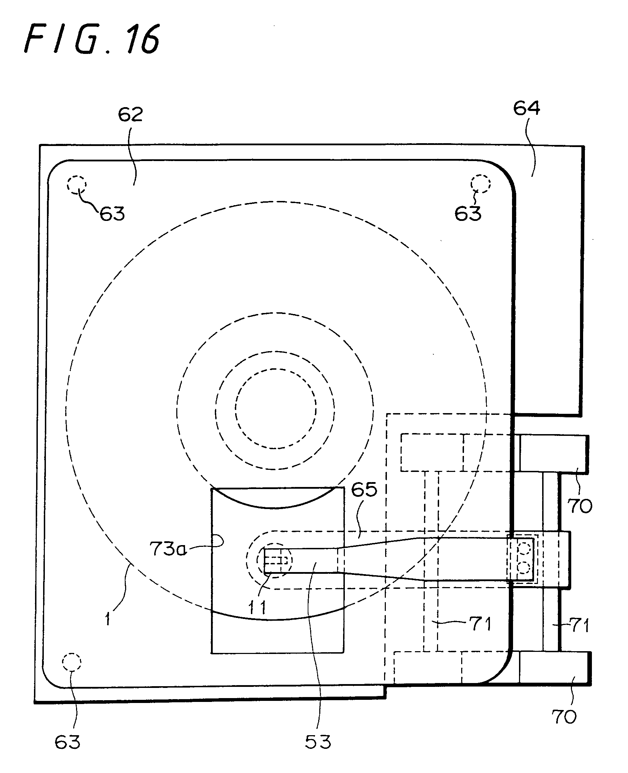

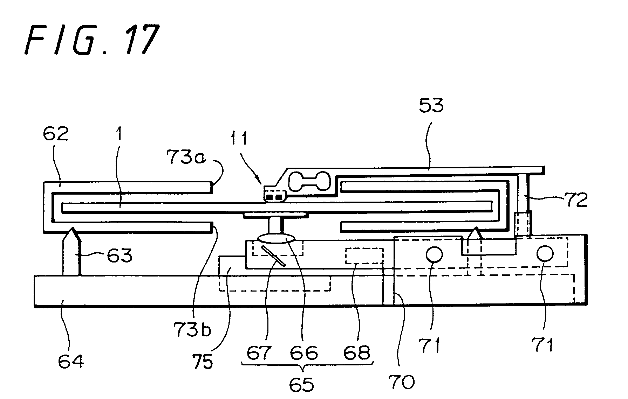

FIGS. 16 and 17 schematically show a magneto-optical recording and reproducing apparatus in which the a slide-type magnetic head 53 for magneto-optical recording is assembled.

As shown in FIGS. 16 and 17, reference numeral 61 depicts an apparatus body, and 62 a disc cartridge in which a magneto-optical disc 1 is incorporated. The apparatus body 61 comprises a disc cartridge holder 64 having a plurality of holding portions 63, a spindle motor 75 for rotating the disc 1, the magnetic head 53 movable in the upper and lower direction across the magneto-optical disc 1 and an optical system pickup assembly 65, wherein the magnetic head 53 and the optical pickup assembly 65 are slid in he radial direction of the magneto-optical disc 1 in synchronism with each other.

The optical system pickup assembly 65 comprises a lens system 66, a reflection mirror 67 and a laser light source 68. The optical pickup assembly 65 is supported on a pair of guide shafts 71 extended between base portions 70, 70. The optical system pickup assembly 65 is connected with a drive source (not shown) and can be moved in the horizontal direction. The lens system 66 is provided through a bi-axial actuator (not shown) and can be moved in the upper and lower direction when the focusing servo is effected or when the disc cartridge 62 is inserted and/or ejected. The magnetic head 53 having the head body 11 mounted on the top is integrally attached to the optical system pickup assembly 65 via a slider 72 that is moved in the upper and lower direction.

The magnetic head 53 and the optical system pickup assembly 65 are translated on a guide shaft 71 along the radial direction of the magneto-optical disc 1 in unison with each other.

The disc cartridge 62 has on its upper and lower surfaces a window 73a into which the magnetic head 53 is inserted and a window 73b through which a laser beam is introduced.

In the apparatus body 61, when the disc cartridge 62 is inserted, the magnetic head 53 is moved upwardly by the slider 72 and the lens system 66 is moved downwardly so that the disc cartridge 62 is held on the holder portions 63. Then, the magnetic head 53 is moved downwardly and the head body 11 is brought in contact with the disc surface 1a through the window 73a with a predetermined pressure.

The magneto-optical disc 1 is rotated at a predetermined linear velocity by the spindle motor 75, whereby the head body 11 is slid on the disc surface 1a while in contact with the disc surface 1a. Also, a laser beam from the optical pickup assembly 65 that is moved in a ganged relation with the magnetic head 53 is radiated through the window 73b on the disc surface 1a, thereby a magneto-optical recording being effected on the magneto-optical disc 1.

Alternatively, the magnetic head 53 may be attached by another method. Though not shown, the slider 72 is replaced with a supporting member and the magnetic head 53 is rotatably attached on the top of the supporting member by means of a hinge mechanism. When the disc cartridge 62 is inserted, the hinge mechanism is opened to escape the magnetic head 53.

Action and effect of the magnetic head 53 will be described below.

The head arm 14 is moved along the guide shaft 71 in parallel to the disc surface 1a so that the head body 11 can be moved in the radial direction of the magneto-optical disc 1. The head arm 14 is not movable relative to the disc surface 1a in the vertical direction. Therefore, the magneto-optical disc 1 is moved upwardly and downwardly relative to the disc surface 1a within an allowable range of a rotational fluctuation of the disc surface. In the case of a very small magneto-optical disc having a diameter of 64 mm, for example, the magneto-optical disc 1 is moved upwardly and downwardly in a range of ± 0.7 mm.

The head body 11 is generally spring-biased downwardly by the coil spring 49 interposed between the hinge construction member 13 and the head arm 14 and engaged at a predetermined lower position by a stopper portion 51. Upon recording, as shown in FIGS. 8A and 8B, the head-body 11 is brought in contact at its sliding portion with the disc surface 1a with a predetermined pressure (e.g., small pressure of several grams) and slid thereon.

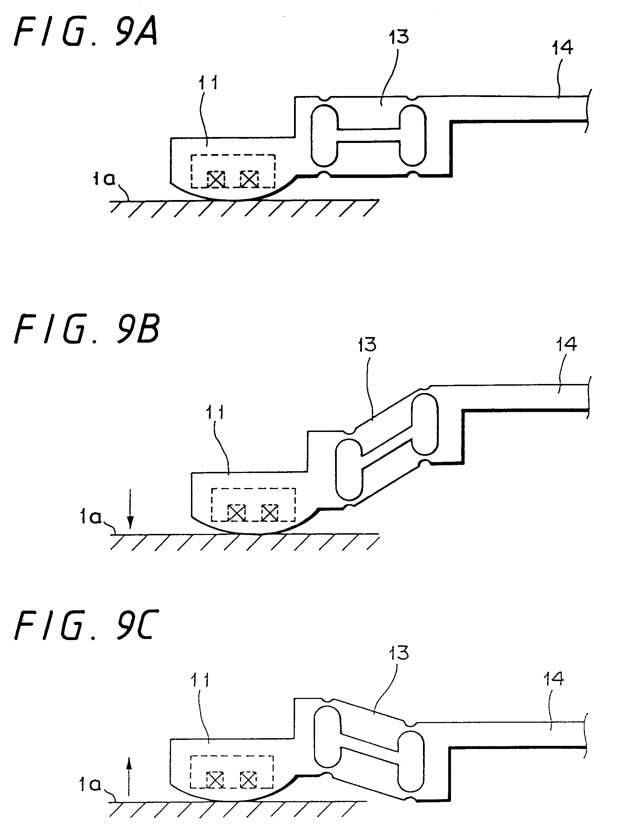

The hinge construction member 13 includes the hinge portions 33, 34, 35 and 36 dispose on the respective corner portions of the parallelogram so that, when the disc surface 1a is fluctuated upwardly and downwardly by the rotational fluctuation of the disc surface of the magneto-optical disc l, as shown in FIGS. 9A through 9C, the head body 11 can be moved parallelly in the upper and lower direction without inclination and can follow the disc surface 1a.

The hinge construction member 13 can provide a large stroke (i.e., upper and lower displacement amount) although a distance L₁ from the top of the head arm 14 to the head body 11 is short.

An equivalent mass applied to the magneto-optical disc 1 is substantially a mass of a portion corresponding to the distance L₁. Accordingly, the equivalent mass is reduced when the distance L₁ is reduced. Hence, the magnetic head 53 can be reduced in weight. Therefore, the head body 11 can contact with the disc 1 with a small pressure so that a magnetic head of high reliability and long lifetime can be obtained.

When the head base 12, the hinge construction member 13 and the head arm 14 are molded by the integral molding process, a rigidity in the disc surface direction (i.e., in the width direction of the head) is increased comparatively. Accordingly, the head body 11 can be prevented from being positionally displaced in the disc surface direction and also, the central position of the head body 11 can be prevented from being displaced when the head body 11 is parallelly moved in the upper and lower direction.

The head base 12, the hinge construction member 13 and the head arm 14 are integrally molded by the so-called engineering plastics and the whole of the magnetic head 53 is reduced in weight, whereby the optical pickup assembly 65 movable in a ganged relation with the magnetic head 53 can be prevented from the burden. Further, since there are less assembly parts constructing the magnetic head 53, the manufacturing process and the assembly process can be made easy.

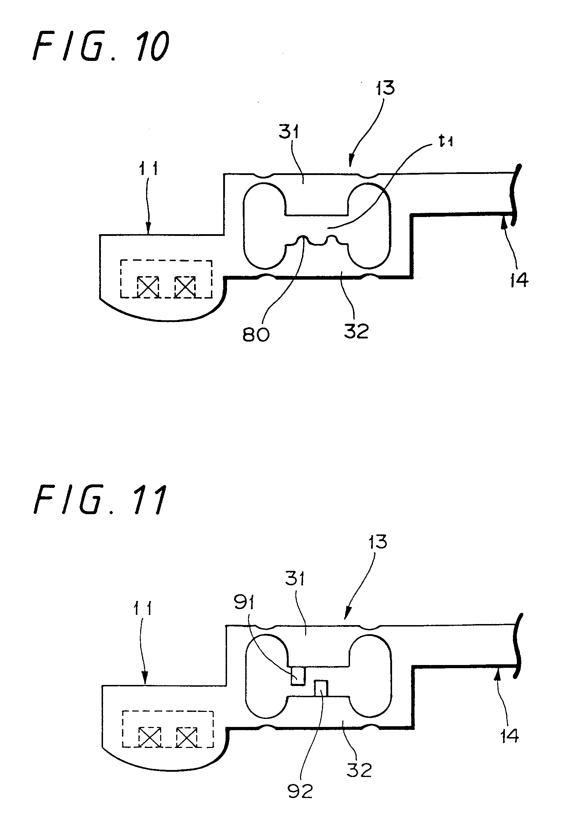

While the stopper portion 51 made of metal or resin is extended from the head arm 14 as described above, the present invention is not limited thereto and such a variant is also possible. That is, as shown in FIG. 10, instead of the stopper portion 51, in the spacing t₁ between the two coupling members 31, 32 of the hinge construction member 13, a stopper portion 80 of a protrusion configuration may be unitarily formed from one coupling member, i.e., the coupling member 32 in this embodiment.

In the hinge construction member 13, when the upper and lower coupling members 31 and 32 are brought in contact with each other and the hinge construction member 13 reaches the position at which the spacing t₁ between the two coupling members 31 and 32 becomes zero, the hinge construction member 13 itself is no more displaced and then stopped. In the case of FIG. 10, at timing point that the other coupling member 31 comes in contact with the protrusive stopper portion 80, the head body 11 can be hindered from being displaced in the upper and lower direction.

The stopper mechanism will be arranged by another method. As shown in FIGS. 11 to 13, there may be formed projection stopper portions 91, 92 on the inside upper and lower portions of the upper and lower coupling members 31, 32. In that case, the side walls of the projection stopper portions 91, 92 are brought in contact with each other, thereby limiting the upper and lower movement of the head body 11 (see FIG. 13 that is used to explain operation of the head).

While there are provided the eight hinge portions 33A, 33B, 34A, 34B, 35A, 35B, 36A and 36B as described above, the hinge portions 33A, 33B; hinge portions 34A, 34B; hinge portions 35A, 35B; and hinge portions 36A, 36B are made common so that four hinge portions may be provided on the whole.

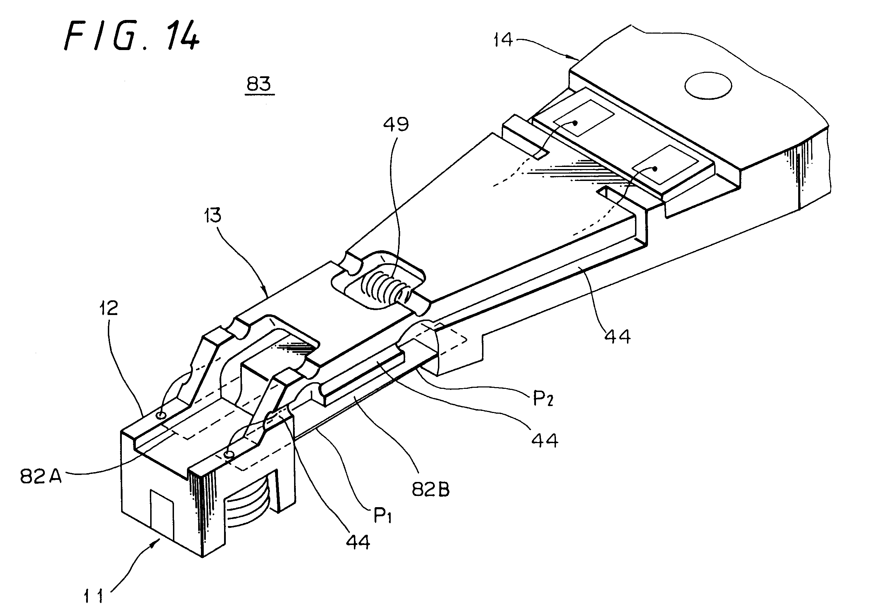

FIG. 14 shows a second embodiment of the present invention. In this embodiment, of the hinge construction member 13, the lower coupling member 32 and the hinge portions 35, 36 at the respective,ends of the coupling member 31 are replaced with spring members 82 (82A, 82B) such as leaf springs, wire springs or the like.

More specifically, the head base 12, the upper coupling portion 31, the hinge portions 33 (33A, 33B) and 34 (34A, 34B) formed on the respective ends of the coupling member 31 and the head arm 14 are integrally molded by the engineering plastics. Also, under the coupling portion 31, a pair of spring members, i.e., leaf springs 82 (82A, 82B) are secured across the head base 12 and the head arm 14.

The leaf springs 82 may be integrally molded with the coupling member 31 having the head base 12 and the hinge portions 33, 34 and the head arm 14 by an insert molding process. A rest of the structure is similar to that of FIG. 3.

Also in a magnetic head 83 thus arranged, a base portion P₁ of the leaf springs 82A, 82B relative to the head base 12 and a base portion P₂ of the head arm 14 correspond to the aforementioned hinge portions 35, 36 so that the magnetic head 83 can be operated similarly to the aforesaid magnetic head 53 by the upper coupling member 31, the hinge portions 33, 34 and the lower leaf springs 82A, 82B. Therefore, the magnetic head 83 can achieve similar effects to those of the magnetic head 53.

In the magnetic head 83, if the leaf spring 82 is given in advance a predetermined spring pressure for spring-biasing the head body 11 in the lower direction, then the coil spring 49 may be omitted.

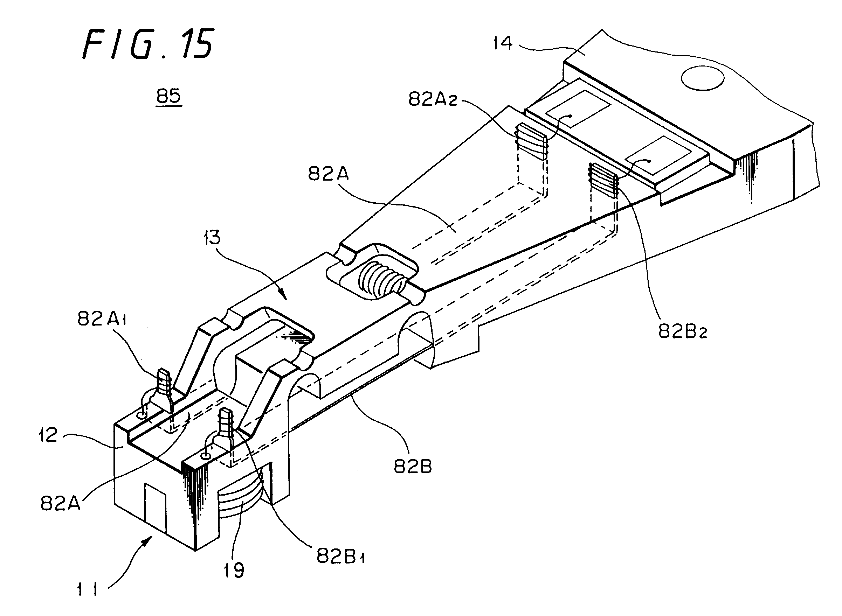

FIG. 15 shows a third embodiment of the present invention. In this embodiment, the two leaf springs 82A, 82B of the lower stage in FIG. 14 are arranged so as to be served as lead wires of the coil 19 of the head element 15. More specifically, the two leaf springs 82A, 82B are extended and one ends 82A₁, 82B₁ are led out to the outside from the upper surface of the head base 12. The other ends 82A₂, 82B₂ are led out to the outside in an opposing relation to the lower surface of the head arm 14 or led out to the outside from the upper surface of the head arm 14 as shown in FIG. 15. Then, the ends of the coil 19 of the head element 15 are extended on the head base 12 and soldered to one end portions 82A₁, 82B₁ of the leaf springs 82A, 82B. The other end portions 82A₂, 82B₂ are connected to the terminal plate 47 or a flexible printed circuit board (not shown).

According to the above arrangement, lead wires of the coil 19 need not be prepared additionally and a bad influence exerted on a spring pressure (spring pressure of the hinge construction member 13) by the lead wires can be avoided. Further, the leads of the coil 19 can be taken out with ease and a working efficiency in the manufacturing process can be improved.

The magnetic head of the present invention can be applied to the magnetic field modulation system and the light modulation system.

According to the present invention, the slide-type magnetic head for magneto-optical recording can be made lightweight and can be brought in contact with the recording medium surface with a small pressure. Further, this magnetic head can sufficiently follow the recording medium even when the recording medium is displaced in the upper and lower direction due to a rotational fluctuation of the recording medium. Therefore, the magnetic head of the present invention can be made high in reliability and long in life.

Having described preferred embodiments of the invention with reference to the accompanying drawings, it is to be understood that the invention is not limited to those precise embodiments and that various changes and modifications could be effected by one skilled in the art without departing from the spirit or scope of the invention as defined in the appended claims.

## Claims

1. A slide-type magnetic head for magneto-optical recording comprising:
a head body (11) having a head base (12) on which a head element (15) is mounted, said head body (11) being brought in slidable contact with a recording medium;
ahead arm (14); and
a hinge construction member (13) formed of upper and lower parallel coupling members (31,32) and hinge portions (33,34) formed on respective ends of said upper and lower coupling members (31,32), wherein said head base (12) is supported to said head arm (14) by means of said hinge construction member (13) so that said head base (12) can be parallelly moved in the upper and lower direction.

2. A slide-type magnetic head for magneto-optical recording comprising:
a head body (11) having a head base (12) on which a head element (15) is mounted, said head body (11) being brought in slidable contact with a recording medium;
ahead arm (14); and
a hinge construction member (13) formed of coupling members (31, 32) having hinge portions formed at respective ends and spring members (82) parallel to said coupling members, wherein said head base (12) is supported to said head arm (14) by means of said hinge construction member (13) so that said head base (12) can be parallelly moved in the upper and lower direction.

3. The slide-type magnetic head for magneto-optical recording according to claim 2, wherein said spring members (82) are made of a conductive material and serve as leads of a coil (19) of said head element (15).
